# EUROPÄISCHE PATENTSCHRIFT

(11) **EP 4 151 559 B1**
(45) Veröffentlichungstag und Bekanntmachung des Hinweises auf die Patenterteilung: **29.04.2026**
(21) Anmeldenummer: 21197772.3
(22) Anmeldetag: 20.09.2021
(51) Int. Cl.: B65G 1/137, G06Q 10/08, H04W 4/80

(54) **LAGERSYSTEM FÜR OBJEKTE UND VERFAHREN ZUR VERWALTUNG VON OBJEKTEN IN EINEM LAGER**
OBJECT STORAGE SYSTEM AND METHOD FOR MANAGING OBJECTS IN STORAGE
SYSTÈME DE STOCKAGE POUR OBJETS ET PROCÉDÉ DE GESTION DES OBJETS DANS UN ENTREPÔT

(43) Veröffentlichungstag der Anmeldung: 22.03.2023
(73) Patentinhaber: Mattern, Achim, 69121 Heidelberg (DE); Solectric Holding GmbH, 76698 Ubstadt-Weiher (DE)
(72) Erfinder: Mattern, Achim, 69121 Heidelberg (DE)
(74) Vertreter: Zurhorst, Stefan

(56) Entgegenhaltungen:
- WO-A1-2020/210820
- US-A1- 2008 077 511
- US-A1- 2017 140 329
- US-B2- 10 358 290

## Beschreibung

Die Erfindung betrifft ein Lagersystem für Objekte in einem Lager sowie ein Verfahren zur Verwaltung von Objekten in einem solchen Lager.

Zahlreiche Objekte wie Waren, Halbzeuge, Verbrauchsmaterialien, Bücher, Akten oder dergleichen werden in geeigneten Lagern für den späteren Gebrauch, für die Weiterverarbeitung, für den Verkauf oder für andere Zwecke bereitgehalten. Ein solches Lager weist mindestens eine Lagerfläche auf, auf der die Objekte geordnet abgestellt bzw. abgelegt werden. Komplexe Lager erfordern ein Lagersystem, in welchem die einzelnen Objekte einen klar definierten Lagerplatz einnehmen, auf dem sie bei Bedarf eindeutig identifiziert und geortet werden können.

Eine bekannte Möglichkeit besteht darin, das Lager mit einer Vielzahl von gleichförmigen Lagerplätzen zu versehen, welche einzeln identifiziert werden können. Problematisch ist dabei, dass sich darin eingelagerte Objekte durchaus in Form und Größe unterscheiden können, während die zugeordneten Lagerplätze eine Standardgröße haben. Der insgesamt verfügbare Lagerraum ist damit nur unzureichend ausgenutzt.

Eine weitere Schwierigkeit besteht darin, dass sich der Lagerbestand ständig ändern kann, was die Lagerung verschiedener Objekte an verschiedenen Lagerstellen erforderlich macht. Eine individuelle Anpassung der Lagerplatzgröße an das Objekt ist damit kaum möglich oder zumindest mit einigen Schwierigkeiten verbunden. Die Identifizierung und vor allem die Lokalisierung einzelner Objekte ist wegen des steten Wandels des Lagerbestandes kompliziert. Eine vom Lageristen ausgeführte Kommissionierung ist mit Aufwand verbunden, da er die einzelnen Objekte in gewünschter Anzahl im Lager auffinden und zusammenstellen muss.

Aus der WO 2020/210820 A1 und der US 2008/0077511 A1 sind jeweils Vorrichtungen und Verfahren bekannt, bei denen mit Label gekennzeichnete Lagerbestände mittels fahrbarer Roboter erfasst werden. Diese Roboter verfügen über Kameras zum Erfassen der Lagerbestände und der Labels. Außerdem sind die Roboter mit Leuchtmitteln ausgestattet, mittels derer die Lagerbestände und die Label im Erfassungsbereich der Kameras beleuchtet werden.

Der Erfindung liegt die Aufgabe zugrunde, ein Lagersystem zu schaffen, welches eine platzsparende Einlagerung und ein einfaches Auffinden einzelner Objekte ermöglicht.

Diese Aufgabe wird durch ein Lagersystem mit den Merkmalen des Anspruchs 1 gelöst.

Der Erfindung liegt des Weiteren die Aufgabe zugrunde, ein Verfahren zur Verwaltung von Objekten in einem Lager anzugeben, welches die Einlagerung von Objekten und das Wiederauffinden derselben vereinfacht.

Diese Aufgabe wird durch ein Verfahren mit den Merkmalen des Anspruchs 7 gelöst.

Nach der Erfindung ist ein Lagersystem für Objekte in einem Lager vorgesehen, wobei das Lager mindestens eine Lagerfläche für die Objekte umfasst. Das Lagersystem weist mindestens einen Verbund aus einer Kontrolleinheit und aus mehreren von der Kontrolleinheit angesteuerten individuellen Leuchtmitteln, eine Kameraeinheit zur Erfassung der Leuchtmittel und der Objekte im Lager, sowie eine Zentraleinheit auf. Die Leuchtmittel sind entlang der Lagerfläche angeordnet. Die Zentraleinheit ist dazu ausgelegt, von der Kameraeinheit erfasste Objekte zu identifizieren und die räumlich dem jeweiligen Objekt zugeordneten aufleuchtenden Leuchtmittel zu erkennen.

Im zugehörigen erfindungsgemäßen Verfahren werden Objekte auf der Lagerfläche abgestellt, von der Kameraeinheit erfasst und in der Zentraleinheit identifiziert. Die entlang der Lagerfläche angeordneten Leuchtmittel werden mittels der Kontrolleinheit zum Aufleuchten gebracht und von der Kameraeinheit erfasst. In der Zentraleinheit erfolgt nun eine Zuordnung eines individuellen Objektes zu zumindest einem Leuchtmittel, welches sich in unmittelbarer räumlicher Nähe zu diesem Objekt befindet.

Die mindestens eine Kameraeinheit des Lagersystems kann die zugehörigen Objekte erfassen, welche dann in der Zentraleinheit identifiziert werden. Dadurch kann auf einfache Weise einem von der Kameraeinheit erfassten Objekt ein physischer Platz zugewiesen werden. Aufgrund dieser Zuweisung lässt sich dann das entsprechende Objekt dann durch die zugehörigen aufleuchtenden Leuchtmittel sehr einfach identifizieren. Die Regale müssen nicht in Fächer unterteilt werden. Das erfindungsgemäße Lagersystem ordnet vielmehr individuell den einzelnen Objekten einen ihrer Größe entsprechenden Lagerplatz mit einer entsprechenden Anzahl von Leuchtmitteln zu. Damit können die Objekte extrem platzsparend an beliebigen Stellen eingelagert werden. Die zugehörigen Leuchtmittel ermöglichen in einfacher Weise das Wiederauffinden des entsprechenden Objekts durch visuell wahrnehmbare Signalgebung. Das erfindungsgemäße Lagersystem lässt sich ebenso wie das zugehörige Verfahren mit allen gängigen vorhandenen Lager- und Kommissionierungssystemen wie auch mit einfachen Smartphone Apps kombinieren. Aufgrund der einfachen Nachrüstmöglichkeit stellt dieses System eine ideale Lösung dar, bestehende Altsysteme einfach und schnell zu ergänzen oder sogar zu ersetzten.

In vorteilhafter Weiterbildung der Erfindung ist die Kameraeinheit auch zur Erfassung von Leerstellen im Lager vorgesehen ist, wobei die Zentraleinheit dazu ausgelegt ist, von der Kameraeinheit erfasste Leerstellen zu identifizieren und die räumlich der jeweiligen Leerstelle zugeordneten Leuchtmittel zu erkennen. Im zugehörigen Verfahren werden Leerstellen im Lager von der Kameraeinheit erfasst und in der Zentraleinheit identifiziert. Außerdem erfolgt in der Zentraleinheit eine Zuordnung einer individuellen Leerstelle zu zumindest einem Leuchtmittel, welches sich in unmittelbarer räumlicher Nähe zu dieser Leerstelle befindet. So können gemäß der Erfindung nicht nur die eingelagerten Objekte, sondern auch unbesetzte Leerstellen in gleicher Weise verwaltet werden.

Es kann ausreichen, einem einzelnen Objekt bzw. dessen Lagerplatz und/oder einer einzelnen Leerstelle nur ein einzelnes in unmittelbarer Nähe befindliches Leuchtmittel zuzuordnen. Dabei kann es sich beispielsweise um dasjenige Leuchtmittel handeln, welches sich in der Mitte des Objektes bzw. dessen Lagerplatzes oder der Leerstelle befindet. Denkbar ist auch die Zuordnung einer begrenzten Anzahl von Leuchtmitteln, wobei beispielsweise nur je ein Leuchtmittel an den beiden Rändern des Lagerplatzes oder der Leerstelle aktiviert wird. Bevorzugt erfolgt jedoch in der Zentraleinheit eine Zuordnung eines individuellen Objektes oder einer Leerstelle zu all denjenigen Leuchtmitteln, welche sich in unmittelbarer räumlicher Nähe zu diesem Objekt bzw. zu dieser Leerstelle befinden. Hierdurch wird der dem jeweiligen Objekt oder der Leerstelle zugeordnete Lagerplatz in seiner vollständigen Erstreckung eindeutig und unmissverständlich visualisiert, so dass Fehlzuordnungen ausgeschlossen sind.

Das oder die Leuchtmittel kommen zumindest dann zum Einsatz, wenn bei Einlagerung eines Objektes dessen Zuordnung zu dem jeweiligen Lagerplatz hinsichtlich Ort und Größe durchgeführt wird. In vorteilhafter Weiterbildung werden das oder die Leuchtmittel auch beim Auffinden des Objektes oder der Leerstelle eingesetzt, indem bei Abruf eines solchen Objektes oder Leerstelle zumindest eines der zugeordneten Leuchtmittel aufleuchtet. So kann mit einfachen Mitteln eine Inventur durchgeführt oder eine Kommissionierung unterstützt werden.

Die Leuchtmittel können in nahezu beliebigen Positionen mit nahezu beliebigen Abständen zueinander positioniert werden. In einer bevorzugten Ausführungsform sind jedoch die Leuchtmittel entlang der Lagerfläche in gleichmäßigen Abständen zueinander angeordnet. Dies erlaubt eine wahlfreie Ausnutzung der zur Verfügung stehenden Stellfläche für unterschiedlich große Objekte, ohne dass die Positionierung der Leuchtmittel hier ein bestimmtes Raster oder andere Einschränkungen vorgeben würde.

Die Leuchtmittel können Glüh- oder Glimmlampen, leuchtende Anzeigen oder dergleichen sein. Bevorzugt sind die Leuchtmittel als Leuchtdioden ausgeführt. Sowohl hinsichtlich Investitionsaufwand als auch hinsichtlich Unterhalt (Energieverbrauch, Lebensdauer) ist mit geringem Aufwand eine deutliche, klare Erkennbarkeit geschaffen. Eine monochrome Lichtabgabe kann hierfür ausreichen. In vorteilhafter Weiterbildung kommen in verschiedenen Farben leuchtfähige Leuchtmittel zum Einsatz, wodurch zusätzlicher Informationsgehalt wie beispielsweise die Zuordnung zu einer bestimmten Kommission oder die Zuordnung zur Tätigkeit eines individuellen Lageristen zur Verfügung steht.

Ergänzend kann es zweckmäßig sein, dass zusätzlich zu den Leuchtmitteln eine Anzeige und/oder RFID (Radio Frequency Identification) für Zusatzinformation wie Anzahl der Objekte oder dergleichen vorgesehen ist. Ein einzelnes Leuchtmittel und die genannte Anzeige können aber auch zu einer leuchtenden Anzeige zusammengefasst sein. Jedenfalls ist hierdurch die Möglichkeit eröffnet, nicht nur den Lagerort eines bestimmten Objektes zu identifizieren bzw. aufzufinden. Vielmehr kann darüber hinaus noch dem Lageristen die Zusatzinformation mitgeteilt werden, beispielsweise wie viele eines bestimmten Objektes er im Rahmen einer Kommission zu entnehmen hat.

Ein Ausführungsbeispiel der Erfindung ist nachfolgend Anhand der Zeichnung näher beschrieben.

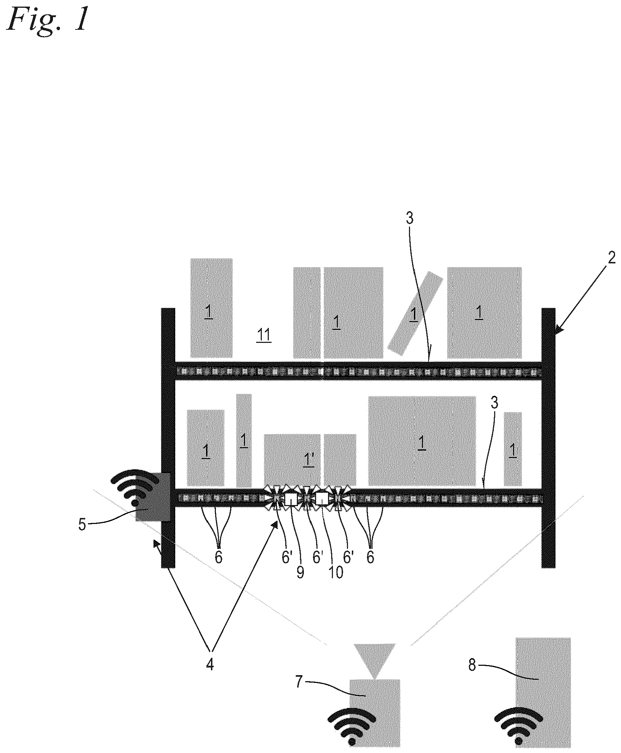

Fig. 1 zeigt in einer schematischen Darstellung ein erfindungsgemäß ausgeführtes Lagersystem für Objekte 1. Das Lagersystem umfasst ein Lager 2, welches hier beispielhaft in Form eines Regals ausgeführt ist. Bei derartigen Regalen kann es sich um Lagerregale, Bücherregale, Kaufhausregale, Supermarktregale, Systemregale, Palettenregale, Aktenregale oder dergleichen handeln. Im Rahmen der Erfindung kommen auch andere Lagerformen wie Palettenstellplätze, Warenauslagen in SB-Restaurants bzw. in SB-Shops oder dergleichen in Betracht. Ganz allgemein geht es um die Lagerhaltung im privaten oder geschäftlichen Umfeld.

Das Lager weist mindestens eine Lagerfläche 3, hier mehrere Lagerflächen 3 auf. Mehrere Objekte 1 wie Waren, Artikel, Verpackungseinheiten, Bücher, Akten oder dergleichen in unterschiedlicher Form und Größe sind auf den Lagerflächen 3 abgestellt. Im Zuge eines dynamischen Lagerhaltungsprozesses werden unterschiedliche Objekte 1 an wechselnden Positionen mit wechselndem Platzbedarf auf den Lagerflächen 3 positioniert. Außerdem kann es im Lager, genauer auf der mindestens einen Lagerfläche 3 auch eine oder mehrere Leerstellen 11 geben, in denen sich kein Objekt 1 befindet.

Entlang ihrer für den Benutzer sichtbaren Vorderkante sind die Lagerflächen mit einer Vielzahl von in einer Reihe angeordneten Leuchtmitteln 6 versehen, welche vorliegend in Form von Leuchtdioden (LEDs) ausgeführt sind. Es können aber auch andere Leuchtmittel 6 zweckmäßig sein. Die Leuchtmittel 6 bilden zusammen mit einer Kontrolleinheit 5 einen Verbund 4, innerhalb dessen sie mittels der Kontrolleinheit 5 einzeln ansteuerbar sind, also einzeln ein- bzw. ausgeschaltet werden können. Es kann sich um monochrome Leuchtmittel handeln. Optional kommen in verschiedenen Farben leuchtfähige Leuchtmittel 6 zum Einsatz, wobei die Leuchtmittel 6 über die Kontrolleinheit 5 individuell in ihrer Leuchtfarbe verändert bzw. an den Bedarf angepasst werden können. Im gezeigten Ausführungsbeispiel ist ein Verbund 4 aus einer Kontrolleinheit 5 und mehreren Leuchtmitteln 6 vorhanden. Im Rahmen der Erfindung kann das Lagersystem aber auch mehrere solcher Verbünde 4 umfassen.

Die Leuchtmittel 6 können in beliebigen, gegebenenfalls auch variierenden Abständen zueinander, in Gruppen oder dergleichen angeordnet sein. Im gezeigten bevorzugten Ausführungsbeispiel sind die Leuchtmittel 6 entlang jeder einzelnen Lagerfläche 3 in gleichmäßigen Abständen zueinander angeordnet. Jedenfalls wird erreicht, dass eine Zuordnung der einzelnen auf den Lagerflächen 3 abgestellten Objekte 1 und/oder auch von ungenutztem Lagerplatz in Form einer Leerstelle 11 zu einer entsprechenden Anzahl von Leuchtmitteln 6 hergestellt werden kann.

Zusätzlich zu den Leuchtmitteln umfasst das Lagersystem noch optionale, hier nur schematisch angedeutete Anzeigen 9 und/oder RFIDs 10 (Radio Frequency Identification Device) für Zusatzinformationen nach Bedarf. Beispielsweise kann hiermit im Rahmen einer Kommissionierung die Anzahl der von der Lagerfläche 3 zu entnehmenden Objekte 1 eines bestimmten Typs angezeigt werden. Auch die Anzeigen 9 werden durch die Kontrolleinheit 5 angesteuert.

Das Lagersystem umfasst schließlich noch mindestens eine Kameraeinheit 7 sowie eine Rechner-Zentraleinheit 8. Die Kontrolleinheit 5, die mindestens eine Kameraeinheit 7 sowie die Zentraleinheit 8 sind in einem Kommunikations-Netzwerk zusammengefasst und kommunizieren drahtgebunden und/oder drahtlos miteinander.

Im Ausführungsbeispiel ist eine Kameraeinheit 7 vorgesehen, welche sämtliche Leuchtmittel 6 eines Verbundes 4, sowie die zugeordneten Objekte 1 und ggf. die zugeordneten Leerstellen 11 insgesamt erfassen kann. Optional kann die Kameraeinheit 7 auch dazu ausgelegt sein, den Informationsgehalt der Anzeigen 9 und/oder der RFIDs 10 oder zumindest eines Teils davon zu erfassen. Gemäß Fig. 1 ist eine einzelne, stationär feststehende Kameraeinheit 7 vorgesehen, welche sämtliche Leuchtmittel 6 eines Verbundes 4, sämtliche zugeordneten Objekte 1 und sämtliche zugeordnete Leerstellen 11 sowie Anzeigen 9 und RFIDs 10 insgesamt erfassen kann. Es kann aber auch eine bewegliche Kameraeinheit 7 zweckmäßig sein, welche die Leuchtmittel 6, mögliche Informationen der Anzeigen 9 und/oder der RFIDs 10, die Objekte1 und bei Bedarf auch die Leerstellen 11 sequentiell beispielsweise in einem Matrixmuster abtastet. Dabei kann es sich um eine mechanisch entlang fester Bahnen geführte Kameraeinheit, aber auch um eine frei bewegliche Kameraeinheit beispielsweise in Form der Kamera eines vom Benutzer getragenen Mobiltelefons oder um die Kamera eines Fahrzeuges oder eines Fluggerätes bzw. in Form eines Multikopters handeln. Das Vorgenannte gilt gleichermaßen für eine einzelne Kameraeinheit 7 wie auch für die Möglichkeit, mehrere Kameraeinheiten 7 innerhalb des erfindungsgemäßen Lagersystems einzusetzen. Die Kameraeinheit 7 lässt sich auch im Rahmen des erfindungsgemäßen Verfahrens in eine "Augmented Reality"-Lösung oder eine "Virtual Reality"-Lösung implementieren.

Je nach Anwendungsfall kann die Zentraleinheit 8 ein leistungsfähiges Computersystem mit entsprechender Software, ein Smartphone mit einer geeigneten App oder ein Cloud-Service bzw. eine Cloud-Anwendung sein. Ungeachtet davon ist die Zentraleinheit 8 dazu ausgelegt, die von der Kameraeinheit 7 erfassten Objekte 1 zu identifizieren, die räumlich den jeweiligen Objekten 1 zugeordneten Leuchtmittel 6 zu erkennen, und außerdem die logische Zuordnung der genannten Leuchtmittel 6 zu den jeweiligen Objekten 1 herzustellen.

Im zugehörigen erfindungsgemäßen Verfahrensablauf werden gemäß einer kurzen Zusammenfassung verschiedene Objekte 1 auf der Lagerfläche 3 abgestellt, von der Kameraeinheit 7 erfasst und in der Zentraleinheit 8 identifiziert. Die entlang der Lagerfläche 3 angeordneten Leuchtmittel 6 werden mittels der Kontrolleinheit 5 zum Leuchten gebracht und ebenfalls von der Kameraeinheit 7 erfasst. In der Zentraleinheit 8 erfolgt dann eine Zuordnung eines individuellen Objektes 1 zu zumindest einem Leuchtmittel 6, welches sich in unmittelbarer räumlicher Nähe zu diesem Objekt 1 befindet. Bevorzugt erfolgt die Zuordnung nicht nur zu einem einzelnen Leuchtmittel 6, sondern zu mehreren und insbesondere zu sämtlichen Leuchtmitteln 6, welche sich in unmittelbarer räumlicher Nähe zu diesem Objekt 1 befinden. Bei Abruf eines Objektes 1 aus dem erfindungsgemäßen Lagersystem leuchten zumindest eines der zugeordneten Leuchtmittel 6 und insbesondere die mehreren zugeordneten Leuchtmittel 6 für die Auffindung des Objektes 1 auf. Ergänzend kann über die Anzeige 9 noch angezeigt werden, wie viele dieser Objekte 1 aus dem Lager 2 zu entnehmen sind.

Im Einzelnen kann der erfindungsgemäße Verfahrensablauf wie folgt ablaufen:
Zunächst ist eine Erfassung der in Frage kommenden Objekte 1 erforderlich. Die Objekte 1 sind häufig über Barcodes, oder ähnliche Systembeschriftungsweisen erfasst und beschrieben, was in das Lagersystem eingespeist wird, und was die spätere Zuordnung zur Position für das Personal erleichtert. Im Rahmen der Erfindung kann die Erfassung aber auch initial mittels des beschrieben Lagersystems unter Verwendung der Kameraeinheit 7 in Verbindung mit einer geeigneten Bilderkennungs-Software erfolgen, wenn zuvor die für die Objekt-Erfassung notwendigen Datenmodelle des maschinellen Lernens bzw. Deep Learning entsprechend "trainiert" wurden. Die Eintrainierung der Objekte 1 kann direkt beim Einräumen in das Lager 2 stattfinden.

Dann folgt die Inbetriebnahme des Lagersystems. Hierzu wird im ersten Schritt über den Netzwerkaustausch festgestellt, wie viele Verbünde 4 aus Kontrolleinheit 5 und Leuchtmitteln 6 sich im selben Netzwerk befinden. Die Zentraleinheit 8 bildet daraus ein Cluster mit den entsprechenden Leuchtmitteln 6 pro Verbund 4. Im Initiallauf werden alle Leuchtmittel 6 einmal, eventuell farbkodiert, durchlaufen (ein-/ausgeschaltet) und in Echtzeit an die Zentraleinheit 8 gemeldet.

Währenddessen erfassen die Kameraeinheit(en) 7 alle Objekte 1 in ihrem jeweiligen Sichtfeld kontinuierlich. Sobald aufleuchtende Leuchtmittel 6 in der unmittelbaren Nähe eines bestimmten Objektes 1 detektiert werden, wird das jeweilige Objekt 1, gegebenenfalls auch dessen Anzahl, mit mindestens einem und insbesondere mit mehreren bzw. allen in unmittelbarer Nähe befindlichen Leuchtmitteln 6 in der Zentraleinheit 8 logisch verbunden und abgespeichert. Im gezeigten Beispiel gemäß Fig. 1 wurde erkannt, dass sich bestimmte, mit 6' bezeichnete Leuchtmittel unter einem bestimmten Objekt 1' befinden. Zwischen den Leuchtmitteln 6' und dem Objekt 1' wird in der Zentraleinheit 8 eine logisch eindeutige Zuordnung hergestellt. Damit kennt das Lagersystem den Aufenthalt/Standort dieses bestimmten Objekts 1' innerhalb des gesamten Clusters und kann jederzeit bei Standortanfragen/Standortsuchen als Leitsystem zur Verfügung stehen und den Lagerort des bestimmten Objekts 1' angeben. Der angefragte Standort des bestimmten Objektes 1' kann durch eine oder mehrere zugeordnete Leuchtmittel 6 visualisiert werden, was bei Bedarf durch eine bestimmte Farbcodierung unterstützt werden kann. Das Gleiche gilt natürliche auch für jedes andere Objekt 1.

Hervorzuheben ist in diesem Zusammenhang die Flexibilität des erfindungsgemäßen Lagersystems dahingehend, dass unterschiedliche Objekte 1 mit unterschiedlicher Form und Größe einen unterschiedlichen Platzbedarf haben. Freier Lagerplatz muss nur in einem solchen Umfang zugewiesen werden, wie es das jeweilige Objekt 1 tatsächlich bedarf, ohne das fest vorgegebene Lagerplatzgrößen einzuhalten wären. Der tatsächlich eingenommene Lagerplatz wird in erfindungsgemäßer Weise durch die variable Anzahl von zugeordneten Leuchtmitteln 6 berücksichtigt. Bei sich veränderndem Lagerbestand kann auch die Lagerplatzzuordnung in Position und Größe beliebig angepasst werden, sodass eine maximale Ausnutzung der Lagerkapazität möglich ist.

Insgesamt ergeben sich aus der Erfindung zahlreiche vorteilhafte Anwendungsmöglichkeiten:
Die Kameraeinheit(en) 7 können Objekte 1 und Leerstellen 11 in regelmäßigen Zeitabständen erfassen. Dadurch werden mit jedem Erfassungsdurchlauf Mengen und Standorte der Objekte 1 im System bestätigt oder entsprechend korrigiert. Diese Flexibilität erlaubt die Aufhebung eines physischen Ablage-Ordnungssystems, da jederzeit der aktuelle Standort eines bestimmten Objekts erfasst und abrufbar ist. Diese Flexibilität erlaubt unzählige neue Anwendungsmöglichkeiten neben den klassischen Lagerverwaltungen, Warenauslagesystemen, der Kommissionierung, etc. auch in neuen Endkundenlösungen und Smart-Home Anwendungen zum Organisieren und Auffinden von Objekten im privaten Umfeld.

Das System eignet sich ebenfalls für die einfache und schnelle Kommissionierung der Objekte 1. Hierzu ist lediglich der Export der Kommissionierlisten vom vorhandenen ERP-System (Enterprise Resource Planning) oder der entsprechenden Lagerveraltungssoftware notwendig. Die Leuchtmittel 6 können Licht- und gegebenenfalls auch Farbsignale erzeugen, welche es ermöglichen, die gewünschten Objekte 1 auf dem optimalen Weg aufzufinden und zu kommissionieren. Durch verschiedene Licht- und Farbsignale können auch mehrere Kommissionierer zeitgleich tätig sein und/oder mehrere Kommissionen zeitgleich durchgeführt werden. Durch die Farbcodes der Leuchtmittel 6 und/oder durch die direkte Anzeige der Anzahl der zu kommissionierenden Objekte 1 in der Anzeige 9 kann eine Kommissionierung ohne weitere Hilfsmittel wie Listen, Scanner oder Tablets durchgeführt werden.

Eine weitere vorteilhafte Ausgestaltung der Erfindung kann darin liegen, dass die Leuchtmittel 6 nicht als einfache LEDs, sondern direkt als leuchtende Anzeigen 9 mit alphanumerischer Anzeige von einzelnen Ziffern oder von komplexeren Angaben ausgeführt sind. Hierdurch kann die Anzahl der zu kommissionierenden Produkte unmittelbar und bei Bedarf auch in der entsprechenden Farbe angezeigt werden. Auch weiterführende Angaben können dargestellt werden.

Das Lagersystem eignet sich ebenfalls zur Durchführung einer ständigen automatischen Inventur. Hierzu ist lediglich der Export des Lagerbestandes vom vorhandenen ERP-System oder der entsprechenden Lagerverwaltungssoftware notwendig. Durch Vergleich der Daten der Objekterkennung mit den Daten des exportierten Lagerbestandes lassen sich Differenzen erkennen und dem Anwender melden.

Eine weitere vorteilhafte Ausgestaltung der Erfindung kann darin liegen, dass die Kommissionierer per Gestensteuerung aufgrund der vorhandenen, im System integrierten Kameraeinheiten den Kommissionierungsprozess unterstützen können. Über eine solche Gestensteuerung können auch zur Unterstützung bei selbst erkannten Differenzen des Lagerbestandes notwendige Korrekturen weitergeleitet oder selbst vorgenommen werden.

In einer vorteilhaften Weiterbildung des Lagersystems bzw. des Verfahrens können auch RFID basierende Informationen von mobilen Kameraeinheiten mit RFID lesender Funktion einfließen, um beispielhaft zur Identifikation sowie Mengenkalkulation herangezogen zu werden.

## Patentansprüche

1. Lagersystem für Objekte (1) in einem Lager (2), wobei das Lager (2) mindestens eine Lagerfläche (3) für die Objekte (1) umfasst, wobei das Lagersystem mindestens einen Verbund (4) aus einer Kontrolleinheit (5) und mehreren von der Kontrolleinheit (5) angesteuerten individuellen Leuchtmitteln (6), mindestens eine fest verbaute und/oder mobile Kameraeinheit (7) zur Erfassung der Objekte (1) im Lager (2), sowie eine Zentraleinheit (8) aufweist, und wobei die Zentraleinheit (8) dazu ausgelegt ist, von der Kameraeinheit (7) erfasste Objekte (1) zu identifizieren,
**dadurch gekennzeichnet, dass** die Leuchtmittel (6) entlang der Lagerfläche (3) angeordnet sind, dass die Kameraeinheit (7) zur Erfassung der Leuchtmittel (6) und der Objekte (1) im Lager (2) vorgesehen ist, und dass die Zentraleinheit (8) dazu ausgelegt ist, die räumlich dem jeweiligen Objekt (1) zugeordneten aufleuchtenden Leuchtmittel (6) zu erkennen.

2. Lagersystem nach Anspruch 1,
**dadurch gekennzeichnet, dass** die Kameraeinheit auch zur Erfassung von Leerstellen (11) im Lager (2) vorgesehen ist, und dass die Zentraleinheit (8) dazu ausgelegt ist, von der Kameraeinheit (7) erfasste Leerstellen (11) zu identifizieren und die räumlich der jeweiligen Leerstelle (11) zugeordneten Leuchtmittel (6) zu erkennen.

3. Lagersystem nach Anspruch 1 oder 2,
**dadurch gekennzeichnet, dass** die Leuchtmittel (6) entlang der Lagerfläche (3) in gleichmäßigen oder beliebigen Abständen zueinander angeordnet sind.

4. Lagersystem nach einem der Ansprüche 1 bis 3,
**dadurch gekennzeichnet, dass** die Leuchtmittel (6) vorzugsweise Leuchtdioden sind.

5. Lagersystem nach einem der Ansprüche 1 bis 4,
**dadurch gekennzeichnet, dass** in verschiedenen Farben leuchtfähige Leuchtmittel (6) zum Einsatz kommen.

6. Lagersystem nach einem der Ansprüche 1 bis 5,
**dadurch gekennzeichnet, dass** zusätzlich zu den Leuchtmitteln (6) eine Anzeige (9) und/oder RFID (10) für Zusatzinformation wie Anzahl der Objekte (1) oder dergleichen vorgesehen ist.

7. Verfahren zur Verwaltung von Objekten (1) in einem Lager (2) mittels eines Lagersystems nach einem der Ansprüche 1 bis 6, wobei das Lager (2) mindestens eine Lagerfläche (3) für die Objekte (1) umfasst, wobei Objekte (1) auf der Lagerfläche (3) abgestellt, von der Kameraeinheit (7) erfasst und in der Zentraleinheit (8) identifiziert werden,
**dadurch gekennzeichnet, dass** das Verfahren folgende Verfahrensschritte umfasst:
- die entlang der Lagerfläche (3) angeordneten Leuchtmittel (6) werden mittels der Kontrolleinheit (5) zum Aufleuchten gebracht und von der Kameraeinheit (7) erfasst;
- In der Zentraleinheit (8) erfolgt eine Zuordnung eines individuellen Objektes (1) zu zumindest einem Leuchtmittel (6), welches sich in unmittelbarer räumlicher Nähe zu diesem Objekt (1) befindet.

8. Verfahren nach Anspruch 7,
**dadurch gekennzeichnet, dass** Leerstellen (11) im Lager (2) von der Kameraeinheit (7) erfasst und in der Zentraleinheit (8) identifiziert werden, und dass in der Zentraleinheit (8) eine Zuordnung einer individuellen Leerstellen (11) zu zumindest einem Leuchtmittel (6) erfolgt, welches sich in unmittelbarer räumlicher Nähe zu dieser Leerstellen (11) befindet.

9. Verfahren nach Anspruch 7 oder 8,
**dadurch gekennzeichnet, dass** in der Zentraleinheit (8) eine Zuordnung eines individuellen Objektes (1) oder Leerstelle (11) zu denjenigen Leuchtmitteln (6) erfolgt, welche sich in unmittelbarer räumlicher Nähe zu diesem Objekt (1) oder dieser Leerstelle (11) befinden.

10. Verfahren nach einem der Ansprüche 7 bis 9,
**dadurch gekennzeichnet, dass** bei Abruf eines Objektes (1) zumindest eines der zugeordneten Leuchtmittel (6) für die Auffindung des Objektes (1) oder der Leerstelle (11) aufleuchtet.

## Claims

1. Storage system for objects (1) in a store (2), wherein the store (2) comprises at least one storage surface (3) for the objects (1), wherein the storage system has at least one grouping (4) made up of a control unit (5) and multiple individual lighting elements (6) actuated by the control unit (5), at least one fixed and/or mobile camera unit (7) for capturing the objects (1) in the store (2), and a central unit (8), and wherein the central unit (8) is designed to identify objects (1) captured by the camera unit (7),
**characterized in that** the lighting elements (6) are arranged along the storage surface (3), **in that** the camera unit (7) is provided to capture the lighting elements (6) and the objects (1) in the store (2), and **in that** the central unit (8) is designed to detect the illuminating lighting elements (6) that are spatially assigned to the respective object (1).

2. Storage system according to claim 1,
**characterized in that** the camera unit (7) is also provided to capture empty spaces (11) in the store (2), and **in that** the central unit (8) is designed to identify empty spaces (11) captured by the camera unit (7) and to detect the lighting elements (6) that are spatially assigned to the respective empty space (11).

3. Storage system according to claim 1 or 2,
**characterized in that** the lighting elements (6) are arranged along the storage surface (3) at regular or arbitrary distances from one another.

4. Storage system according to any one of claims 1 to 3,
**characterized in that** the lighting elements (6) are preferably light-emitting diodes.

5. Storage system according to any one of claims 1 to 4,
**characterized in that** lighting elements (6) that are able to light up in different colours are used.

6. Storage system according to any one of claims 1 to 5,
**characterized in that**, in addition to the lighting elements (6), an indicator (9) and/or RFID (10) for additional information, such as the number of objects (1) or similar, is provided.

7. Method for managing objects (1) in a store (2) by means of a storage system according to any one of claims 1 to 6, wherein the store (2) comprises at least one storage surface (3) for the objects (1), wherein objects (1) are placed on the storage surface (3), captured by the camera unit (7) and identified in the central unit (8),
**characterized in that** the method comprises the following method steps:
- the lighting elements (6) arranged along the storage surface (3) are illuminated by means of the control unit (5) and captured by the camera unit (7);
- in the central unit (8), an individual object (1) is assigned to at least one lighting element (6) located in immediate spatial proximity to this object (1).

8. Method according to claim 7,
**characterized in that** empty spaces (11) in the store (2) are captured by the camera unit (7) and identified in the central unit (8) and **in that**, in the central unit (8), an individual empty space (11) is assigned to at least one lighting element (6) located in immediate spatial proximity to this empty space (11).

9. Method according to claim 7 or 8,
**characterized in that**, in the central unit (8), an individual object (1) or empty space (11) is assigned to those lighting elements (6) located in immediate spatial proximity to this object (1) or to this empty space (11).

10. Method according to any one of claims 7 to 9,
**characterized in that**, when an object (1) is retrieved, at least one of the assigned lighting elements (6) is illuminated for finding the object (1) or the empty space (11).

## Revendications

1. Système d'entrepôt pour objets (1) dans un entrepôt (2), l'entrepôt (2) comprenant au moins une surface d'entrepôt (3) pour les objets (1), le système d'entrepôt possédant au moins un ensemble (4) composé d'une unité de contrôle (5) et de plusieurs moyens d'éclairage (6) individuels commandés par l'unité de contrôle (5), au moins une unité de caméra (7) montée fixe et/ou mobile servant à détecter les objets (1) dans l'entrepôt (2), ainsi qu'une unité centrale (8), et l'unité centrale (8) étant conçue pour identifier les objets (1) détectés par l'unité de caméra (7),
**caractérisé en ce que** les moyens d'éclairage (6) sont disposés le long de la surface d'entrepôt (3), **en ce que** l'unité de caméra (7) est prévue pour détecter les moyens d'éclairage (6) et les objets (1) dans l'entrepôt (2) et **en ce que** l'unité centrale (8) est conçue pour reconnaître les moyens d'éclairage (6) allumés associés spatialement à l'objet (1) respectif.

2. Système d'entrepôt selon la revendication 1,
**caractérisé en ce que** l'unité de caméra (7) est également prévue pour la détection d'emplacements vides (11) dans l'entrepôt (2), et **en ce que** l'unité centrale (8) est conçue pour identifier les emplacements vides (11) détectés par l'unité de caméra (7) et pour reconnaître les moyens d'éclairage (6) associés spatialement à l'emplacement vide (11) respectif.

3. Système d'entrepôt selon la revendication 1 ou 2,
**caractérisé en ce que** les moyens d'éclairage (6) sont disposés le long de la surface d'entrepôt (3) à des distances égales ou arbitraires les uns des autres.

4. Système d'entrepôt selon l'une des revendications 1 à 3,
**caractérisé en ce que** les moyens d'éclairage (6) sont de préférence des diodes électroluminescentes.

5. Système d'entrepôt selon l'une des revendications 1 à 4,
**caractérisé en ce que** des moyens d'éclairage (6) pouvant être allumés en différentes couleurs sont utilisés.

6. Système d'entrepôt selon l'une des revendications 1 à 5,
**caractérisé en ce que**, en plus des moyens d'éclairage (6), il est prévu un dispositif d'affichage (9) et/ou RFID (10) pour des informations supplémentaires telles que le nombre d'objets (1) ou similaires.

7. Procédé de gestion d'objets (1) dans un entrepôt (2) au moyen d'un système d'entrepôt selon l'une des revendications 1 à 6, l'entrepôt (2) comprenant au moins une surface d'entrepôt (3) pour les objets (1), des objets (1) étant déposés sur la surface d'entrepôt (3), détectés par l'unité de caméra (7) et identifiés dans l'unité centrale (8),
**caractérisé en ce que** le procédé comprend les étapes suivantes :
- les moyens d'éclairage (6) disposés le long de la surface d'entrepôt (3) sont amenés à s'allumer au moyen de l'unité de contrôle (5) et détectés par l'unité de caméra (7);
- une association est effectuée dans l'unité centrale (8), d'un objet (1) individuel à au moins un moyen d'éclairage (6), lequel se trouve à proximité spatiale directe de cet objet (1).

8. Procédé selon la revendication 7,
**caractérisé en ce que** les emplacements vides (11) dans l'entrepôt (2) sont détectés par l'unité de caméra (7) et identifiés dans l'unité centrale (8), et **en ce qu'**une association est effectuée dans l'unité centrale (8), d'un emplacement vide (11) individuel à au moins un moyen d'éclairage (6) qui se trouve à proximité spatiale directe de cet emplacement vide (11).

9. Procédé selon la revendication 7 ou 8,
**caractérisé en ce qu'**une association est effectuée dans l'unité centrale (8), d'un objet (1) ou d'un emplacement vide (11) individuel aux moyens d'éclairage (6) qui se trouvent à proximité spatiale directe de cet objet (1) ou de cet emplacement vide (11).

10. Procédé selon l'une des revendications 7 à 9,
**caractérisé en ce que**, lors de l'appel d'un objet (1), au moins l'un des moyens d'éclairage (6) associés s'allume pour la recherche de l'objet (1) ou de l'emplacement vide (11).
